# EUROPEAN PATENT APPLICATION

(11) **EP 1 586 990 A2**
(43) Date of publication of application: **19.10.2005**
(21) Application number: 05007873.2
(22) Date of filing: 11.04.2005
(51) Int. Cl.: G06F 3/16

(54) **Transcription apparatus and dictation system**

(30) Priority: 13.04.2004 JP 2004118256
(71) Applicant: Olympus Corporation, Shibuya-ku, Tokyo (JP)
(72) Inventor: Miura, Hiroaki, Shibuya-ku, Tokyo (JP)
(74) Representative: von Hellfeld, Axel

(57) **Abstract**

A personal computer as a transcription apparatus receives voice data from an IC recorder as a voice data recorder, and transcribes the voice data. A standard format of a word processor software program to be applied in a transcription process is identified by a standard format identification recorded in a file of the voice data. During a transcription process, the standard format identification data is transferred together with the voice data from the IC recorder to the personal computer via a USB connection. The predetermined standard format is automatically set in response to the standard format identification. The transcription apparatus efficiently specifies the standard format when the voice data is transcribed.

## Description

### BACKGROUND OF THE INVENTION

### 1. FIELD OF THE INVENTION

The present invention relates to a transcription apparatus including a computer and the like, and a dictation system including a voice data recorder communicating with the transcription apparatus.

### 2. RELATED ART STATEMENT

Japanese Unexamined Patent Application Publication No. 2000-278472 discloses a technique of an image processing apparatus that copies a standard format sentence and document at a high image-quality level while achieving an operability available in the copy operation of copiers.

The known technique is intended to perform a high-quality copying operation to a standard format sentence while keeping the same operability level as that of known copiers. When a standard format sentence is to be copied, a user needs to input a key code associated with the standard format sentence, and recognize a relationship between the standard format sentence and the key code.

If the technique is applied to a standard format setting in a transcription apparatus employing a voice data recorder, a key code associated with the standard format needs to be entered each time the standard format is set. This is inconvenient from the standpoint of job efficiency and job accuracy.

### SUMMARY OF THE INVENTION

A transcription apparatus and a dictation system of embodiments of the present invention address the above-referenced problems, thereby selecting and specifying a standard format in an efficient manner.

A transcription apparatus of one embodiment of the present invention includes: selecting means for selecting voice data to be transcribed, identification information reading means for reading identification information of the voice data selected by the selecting means, start command means for issuing a command for starting a transcription operation, starting means for starting a predetermined document processing system in response to the command for starting the transcription operation issued by the start command means, and standard format setting means for setting a predetermined standard format at the start of the predetermined document processing system, based on the identification information read by the identification information reading means.

A transcription apparatus of another embodiment of the present invention includes: document processing system specifying means for specifying a document processing system for use in the transcription operation, associating means for associating the standard format for use in the document processing system with the identification information attached to the voice data, selecting means for selecting voice data to be transcribed, identification information reading means for reading identification information of the voice data selected by the selecting means, start command means for issuing a command for starting a transcription operation, starting means for starting a predetermined document processing system in response to the command for starting the transcription operation issued by the start command means, and standard format setting means for setting a predetermined standard format at the start of the predetermined document processing system, based on the identification information read by the identification information reading means.

A transcription software program of a third embodiment of the present invention for causing a computer to play voice data, is stored in a storage medium, and includes steps of allowing a user to select voice data to be transcribed, reading identification information of the selected voice data, and setting a predetermined standard format based on the identification information to start a predetermined document processing system in response to a command for starting a transcription operation issued by the user.

A dictation system of the other embodiment of the present invention includes a voice data recorder recording voice data, and a transcription apparatus performing a transcription operation by acquiring the voice data recorded by the voice data recorder. The voice data recorder includes recording means for recording the voice data onto a recording medium, identification information attaching means for attaching identification information to the voice data when the voice data is recorded, transmitting means for transmitting the voice data from the recording medium to the transcription apparatus. The transcription apparatus includes receiving means for receiving the voice data from the voice data recorder, identification information reading means for reading the identification information of the received voice data, start command means for issuing a command for starting the transcription operation, and starting means for starting a predetermined document processing system in response to the command for starting the transcription operation issued by the start command means, and standard format setting means for setting a predetermined standard format based on the identification information read by the identification information reading means at the start of the predetermined document processing system.

These and other features and advantages will be apparent from the following description.

### BRIEF DESCRIPTION OF THE DRAWINGS

Fig. 1 is a block diagram of a dictation system of one embodiment of the present invention, including a personal computer as a transcription apparatus and an IC recorder as a voice data recorder connected to the personal computer;
Fig. 2 is a block diagram of an IC recorder of Fig. 1;
Fig. 3 is an outline of a memory map of a voice data file in the IC recorder of Fig. 1;
Fig. 4 illustrates a list of identification information (work type ID) contained in the voice data file in the IC recorder of Fig. 1 and a standard format associated with the ID information list;
Fig. 5 is a flowchart of a main routine of a control process of the IC recorder of Fig. 1;
Fig. 6 is a flowchart of a subroutine "REC mode" invoked in the main routine of Fig. 5; and
Fig. 7 is a flowchart of a transcription process routine of the personal computer of Fig. 1.

### DESCRIPTION OF THE PREFERRED EMBODIMENTS

The embodiments of the present invention are described below with reference to the drawings.

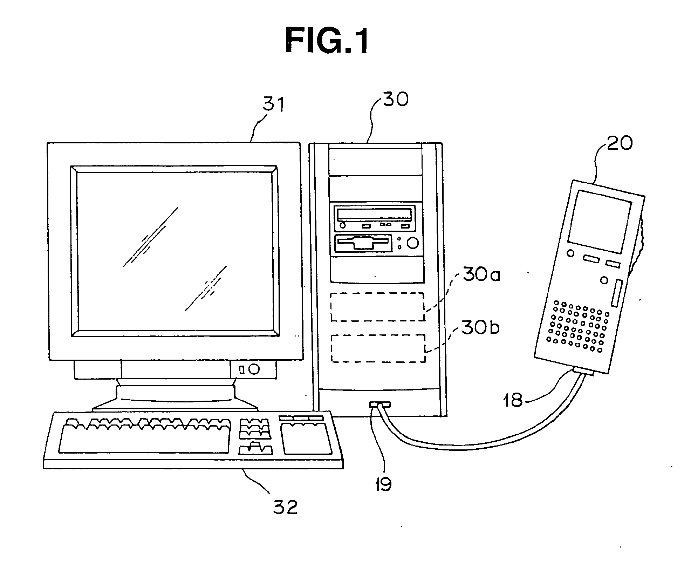

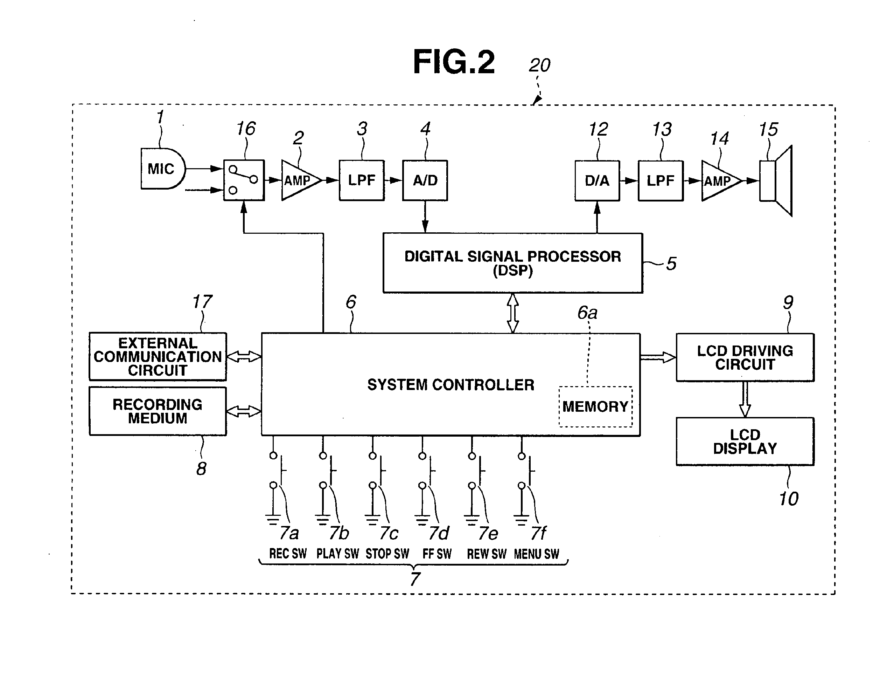

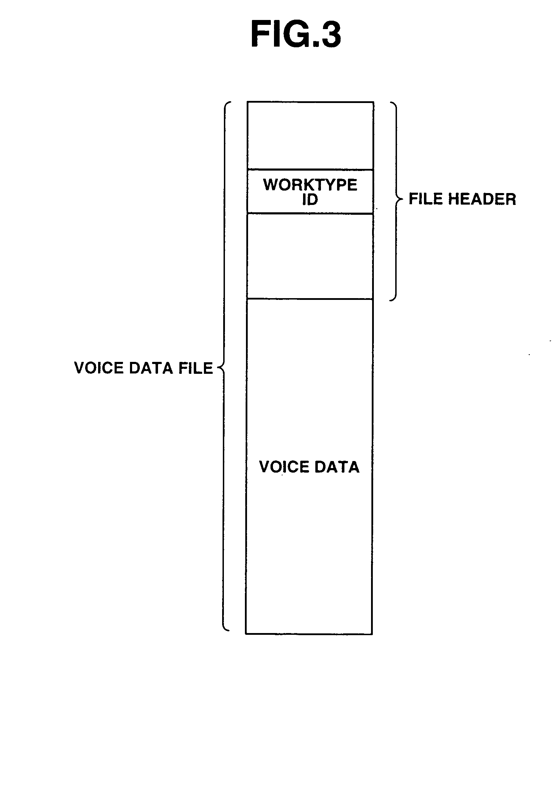

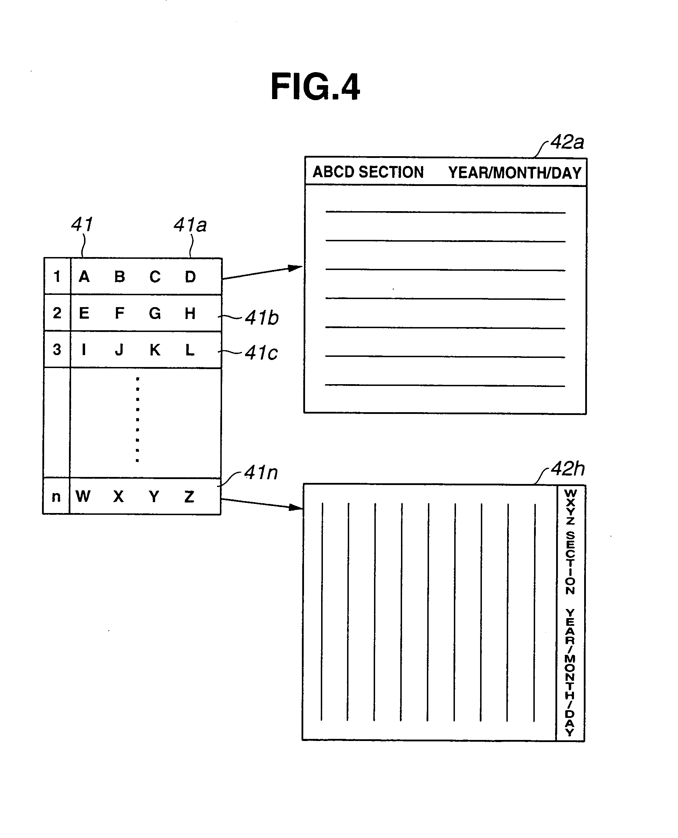

Fig. 1 illustrates a dictation system in accordance with one embodiment of the present invention. The dictation system includes a personal computer (PC) as a transcription apparatus and an integrated circuit (IC) recorder connected to the PC and serving as a voice data recorder. Fig. 2 is a block diagram of the IC recorder. Fig. 3 is a memory map of a voice data file of the IC recorder. Fig. 4 illustrates a list of identification information (work type ID) contained in the voice data file and a standard format associated with the ID information.

As shown in Fig. 1, the PC 30 serving as the transcription apparatus of the present embodiment is a personal computer communicatingly connected to the IC recorder 20. The PC 30 includes a controller 30a for generally controlling the entire computer and an external communication circuit 30b including voice data receiving means and ID information list transmitting means. The controller 30a includes voice data selecting means, as control means to be discussed later, for selecting voice data, ID information reading means, associating means for associating a standard format with ID information, document processing system specifying means for specifying a document processing system for use in a transcription operation, standard format setting means, starting means for starting the predetermined document processing system, transcription start command means, ID information list generating means, and ID information list receiving means.

A transcription software program is installed on the PC 30. Under the control of that software program, control means in the controller 30a operate, specifying a voice data file to be transferred from the IC recorder 20, selecting a standard format applied to the transcription process, and starting the predetermined document processing system performing the transcription process.

The IC recorder 20 is a voice data recorder that stores and plays voice data to and from a removable recording medium (flash memory card). The voice data file contains the ID information, specifying the standard format corresponding to the file, together with the voice data. The voice data file containing the ID information is transferred through a universal serial bus (USB) communication between the IC recorder 20 and the PC 30 of Fig. 1.

As shown in Fig. 2, the IC recorder 20 includes a system controller 6, as control means, including a central processing unit (CPU) controlling the entire IC recorder 20, a digital signal processor (DSP) 5 for performing voice signal processing for recording and playing, a built-in microphone 1, a switch 16 for selecting between the built-in microphone 1 and an external remote-controlled microphone, a microphone amplifier (AMP) 2 for amplifying a voice output signal from the microphone, an LPF 3 for input, an input analog-to-digital (A/D) converter 4, a playing digital-to-analog (D/A) converter 12, an LPF 13 for playing, a power amplifier (AMP) 14 for amplifying a played voice signal, a loudspeaker 15, an LCD display 10, an LCD driving circuit 9 driving the LCD display 10, a removable recording medium 8 composed of a flash memory card for recording input voice data, an operation switch bank 7, an external communication circuit (USB) 17 communicating with external devices, the PC 30 for example, and a USB terminal 18 (Fig. 1) to be connected with the external communication circuit 17.

The built-in microphone 1 converts a sound into an electrical signal. The microphone amplifier 2 amplifies the electrical signal from the built-in microphone 1 or the external remote-controlled microphone.

The LPF 3 and LPF 13 filter out unwanted frequency bands to prevent the generation of noise. The A/D converter 4 analog-to-digital converts an input analog voice signal into a digital signal, and the D/A converter 12 digital-to-analog converts a digital signal into an analog signal.

The digital signal processor 5, under the control of the system controller 6, encodes the digital voice signal from the input A/D converter 4 during recording, and decodes encoded voice data to output the decoded voice signal to the D/A converter 12 during playing.

The D/A converter 12 converts the input digital signal into an analog signal. The power amplifier 14 amplifies a voice signal, and the loudspeaker 15 converts the voice signal into a sound, thereby emitting the sound.

Connected to the system controller 6 are, in addition to the digital signal processor 5, the recording medium 8, the LCD driving circuit 9, the LCD display 10, control signal lines connected to the operation switch bank 7, and a switching signal line which controls the switch 16. The system controller 6 includes record control means which records the voice data onto the recording medium 8, play control means which plays the voice data from the recording medium 8, transmission control means which transfers the voice data from the recording medium 8 to the USB connected PC 30, ID information attaching means which attaches a standard format to the voice data, and ID information list receiving means. The system controller 6 further includes an internal memory 6a composed of a flash memory. The internal memory 6a stores a variety of control information for controlling the IC recorder 20, and ID information list data relating to the standard format transmitted from the PC 30.

The voice data file shown in the memory map of Fig. 3 stored in the recording medium 8 contains the voice data and, in the file header thereof, settings and parameters which are continuously stored even when power is removed from the system controller 6, including, for example, a user ID, setting of the selection of a record mode, setting of the selection of a beep sound, setting of the selection of a voice-activated recorded sound, a play position of data, and a standard format ID that is an ID of a standard format provided by the PC 30 during a transcription process. The standard format ID will be discussed later in more detail. The voice data can contain other types of data, such as video data or numerical data.

Under the control of the LCD driving circuit 9 controlled by the system controller 6, the LCD display 10 displays, in characters or symbols, an operational status of the IC recorder 20 that starts a predetermined sequence in response to a switching operation of the operation switch bank 7. During a recording operation, the LCD display 10 displays a status message that the recording operation is in progress.

The operation switch bank 7 includes a group of operational switches for controlling a variety of functions. Each switch in the operation switch bank 7 is turned on and off in response to the operation of a corresponding control button arranged external to the IC recorder 20. The operation switch bank 7 includes a record switch (REC SW) 7a for starting the recording operation, a play switch (PLAY SW) 7b for playing the voice data recorded on the recording medium 8, a stop switch (STOP SW) 7c for stopping the recording operation or the playing operation, a fast-forward switch (FF SW) 7d for modifying a specified position on the voice data file on the recording medium 8 and selecting the voice data file while editing, a rewind switch (REW SW) 7e, and a menu switch (MENU SW) 7f.

The external communication circuit (USB) 17 includes voice data transmitting means and ID information list receiving means.

The standard format ID specifies a format identified from among a plurality of types of standard formats available in a predetermined word processor software program. A list of the ID data is referred to as an ID information list. Fig. 4 illustrates an ID information list 41. The ID information list 41 contains, as the ID data, a first ID 41a, a second ID 41b, ... , an n-th ID 41n. These ID data are associated with respective standard formats by a transcription software program on the PC 30 (the associating means). The ID information list 41 is thus generated by the ID information generating means. For example, the first ID 41a is associated with a standard format 42a, ..., and the n-th ID 41n is associated with a standard format 42n.

The ID information list 41 composed of a variety of types of IDs of Fig. 4 is transferred to the IC recorder 20 from the PC 30 via the external communication circuit 30b and the external communication circuit 17, and then stored in the internal memory 6a in the IC recorder 20. As will be discussed later, the ID data corresponding to the standard format to be applied to the transcription process is selected from the ID information list 41 when the IC recorder 20 records the voice data. The ID data is then written on the header of the voice data file as a work type ID (see Fig. 3). The PC 30 references the written ID to specify the standard format during the transcription process.

Standard formats other than the n types of standard formats are registered in the predetermined word processor software program. The ID information list 41 transferred to the IC recorder 20 includes those selected from among the standard formats registered in the predetermined word processor software program.

The voice data captured by the built-in microphone 1 is recorded as a single voice data file or a plurality of voice data files on the loaded recording medium 8 under the control of the system controller 6 in the IC recorder 20. The standard format ID data is selected from the ID information list 41 in accordance with the voice data, and written on the header of the voice data file by the ID information attaching means as previously described.

The voice data file recorded on the recording medium 8 is transferred to the PC 30. The PC 30 performs a transcription process on the recorded voice data. The transfer of the voice data file is performed by connecting the IC recorder 20 to the external communication circuit 30b of the PC 30 via the USB terminal 18 and the USB terminal 19 as shown in Fig. 1. The voice data file is recorded onto a predetermined memory of the PC 30 under the control of the system controller 6.

Upon receiving the voice data file from the IC recorder 20, the PC 30 performs the transcription process using the transcription software program. More specifically, the standard format ID data is read from the voice data file by the ID information reading means, and a predetermined document processing system is started. The transcription process is thus initiated by the start command means and the document processing system start means. In accordance with the standard format ID data, the standard format setting means sets the standard format corresponding to the ID data. When the standard format is set, a standard format screen is displayed on a monitor 31 of the PC 30. The playing of the voice data starts, and the transcription process is performed in response to an operation of a keyboard 32 or in response to a response in an automatic voice recognition system.

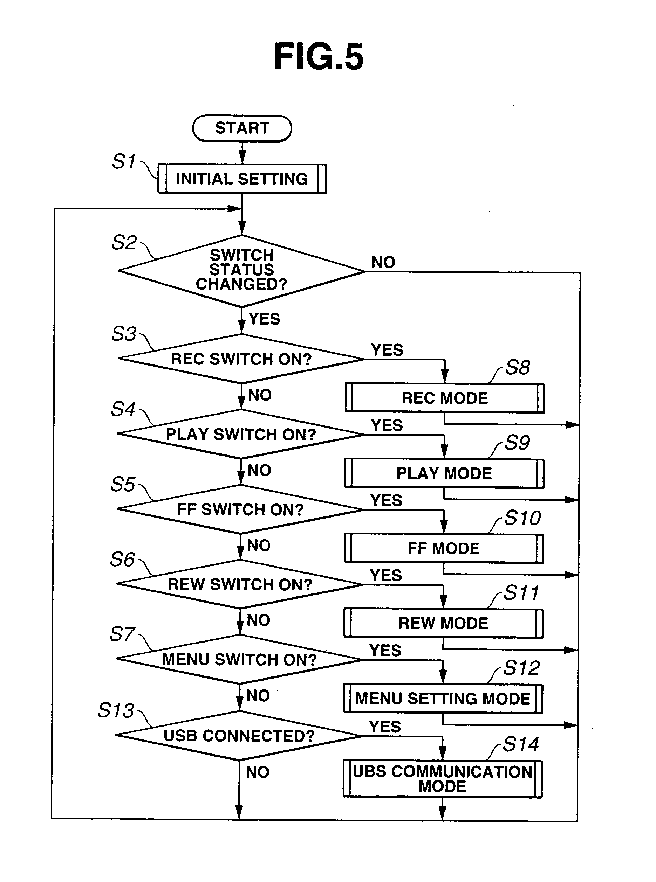

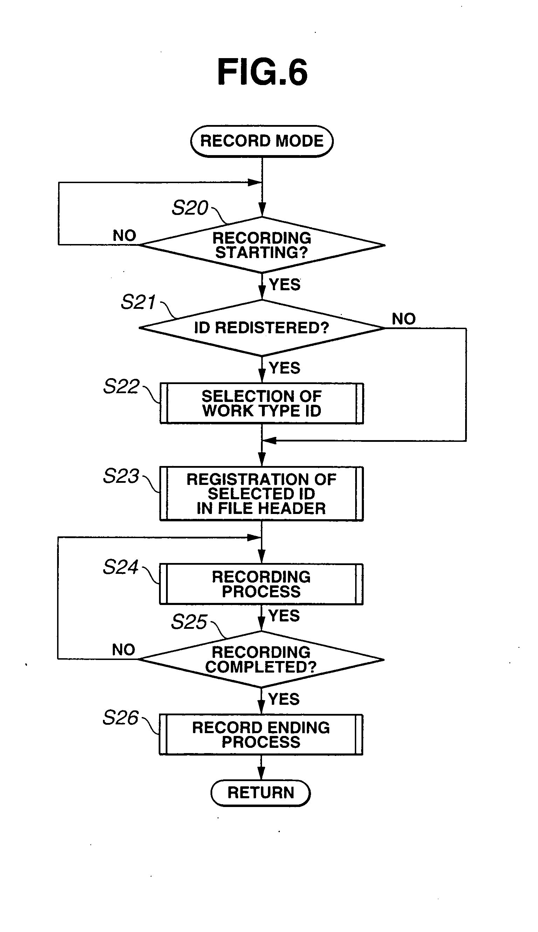

A main routine of a control process of a recording operation of the IC recorder 20 and a subroutine "record mode" invoked in the main routine are described with reference to Figs. 5 and 6.

Fig. 5 is a flowchart of the main routine, and Fig. 6 is a flowchart of the subroutine "record mode".

The process of the main routine and the subroutine record mode are performed under the control of the system controller 6.

In the main routine of Fig. 5, an initial setting is performed on control factors in the IC recorder 20 in step S1. In step S2, a status change (to on) of the operation switch bank 7 is checked. If a change is detected, the main routine proceeds to step S3 through S7.

If the record switch 7a among the operation switch bank 7 is turned on, the main routine jumps to step S8 to invoke the subroutine record mode to perform the recording operation. If the play switch 7b is turned on, the main routine jumps to step S9 to invoke a subroutine play mode to perform the play operation. If the fast-forward switch 7d is turned on, the main routine jumps to step S10 to invoke a subroutine fast-forward mode to perform a fast-forward operation. If the rewind switch 7e is turned on, the main routine jumps to step S11 to invoke a subroutine rewind mode to perform a rewind operation. If the menu switch 7f is turned on, the main routine jumps to step S12 to invoke a subroutine menu setting mode to perform a menu setting operation.

If a USB connection is detected in step S13, the main routine proceeds to step S14 to invoke a subroutine "USB communication mode" to perform a USB communication process. In the USB communication process, the voice data file is exchanged between the external communication circuit 17 of the IC recorder 20 and the external communication circuit 30b of the PC 30 via the USB terminals 18 and 19.

The main routine returns to step S3 after each mode processing is completed.

If the subroutine record mode is invoked in step S8, a start of the recording operation is confirmed in step S20 of Fig. 6. It is determined in step S21 whether the standard format ID has already been registered. If it is determined that the standard format ID has not been registered, the subroutine jumps to step S23. If it is determined in step S21 that the standard format ID has been registered, the subroutine proceeds to step S22 to select one work type ID as the standard format ID from the ID information list 41. In step S23, the ID selected in step S23 is registered in the header of the corresponding voice data file by the ID information attaching means.

The recording means performs the recording operation in step S24. If it is determined in step S25 that the recording operation is completed, a record end process is performed in step S26. The subroutine ends, and the main routine is resumed.

After performing the recording operation, and generating the voice data file, the IC recorder 20 is USB connected to the PC 30. The voice data file containing the standard format ID is transferred (downloaded) to the predetermined memory of the PC 30.

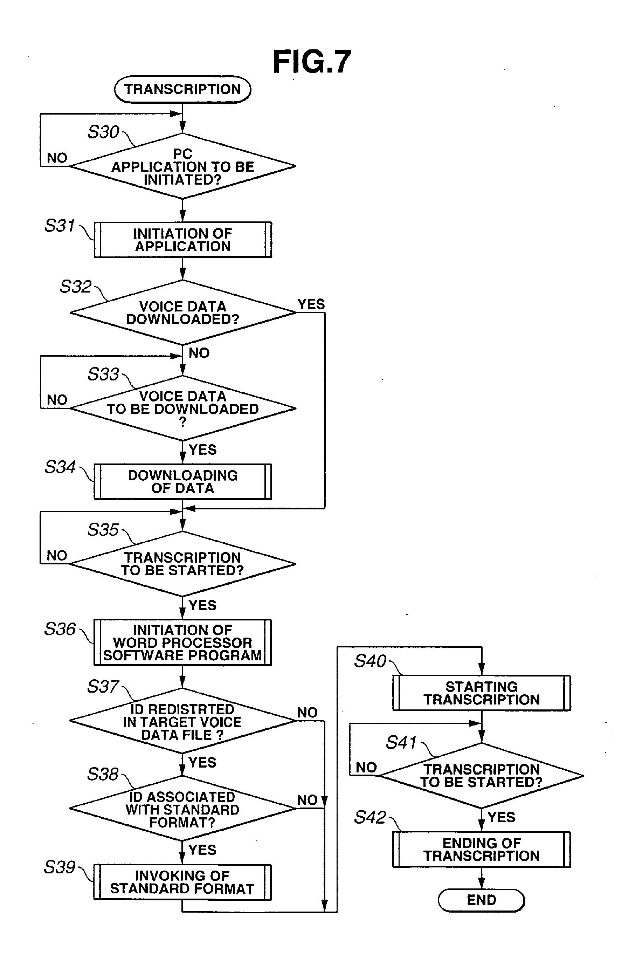

A transcription process routine of the PC 30 is described below with reference to Fig. 7.

Fig. 7 is a flowchart of the transcription process routine.

The process routine is performed under the control of the controller 30a of the PC 30 in accordance with a transcription software program and a predetermined word processor software program, as a document processing system for the transcription process. The two software programs are pre-installed in the PC 30.

After the voice data file is transferred from the IC recorder 20 to the PC 30 via the USB line by the transmitting means and the receiving means, the transcription process for the file is performed by starting the transcription process routine in the PC 30.

The transcription software program is initiated by the starting means in steps S30 and S31 as shown in Fig. 7. It is determined in step S32 whether the voice data file has been downloaded to the PC 30. If it is determined that the voice data file has been downloaded, the routine jumps to step S35. If it is determined in step S32 that the voice data file has not been downloaded, the voice data file is downloaded in step S33 and S34 by the voice data selecting means, and the routine proceeds to step S35.

The start of the transcription process is confirmed by the start command means in step S35. The predetermined word processor program is initiated in step S36. The ID information reading means determines in step S37 whether the standard format ID has been registered in the header of the target voice data file. If it is determined that the standard format ID has not been registered, the routine jumps to step S40 with no standard format specified. If it is determined in step S37 that the standard format ID has been registered, the PC 30 determines in step S38 whether the standard format ID has been associated with the standard format on the word processor software program. If it is determined that the standard format ID has not been associated with the standard format, the routine jumps to step S40 with no standard format specified. If it is determined in step S38 that the standard format ID has been associated with the standard format, the routine proceeds to step S39.

In step S39, the PC 30 reads the standard format associated on the word processor software program using the standard format setting means, displays the standard format on the monitor 31, and then proceeds to step S40.

In step S40, the word processor software program starts transcribing the voice data. If the PC 30 confirms in step S41 that the transcription process has been completed, the PC 30 performs a transcription ending process in step S42 to end the routine.

In accordance with the dictation system including the PC 30 as the transcription apparatus and the IC recorder 20 as the voice data recorder, the standard format is registered with the standard format ID associated therewith on the word processor software program in the PC 30. The list of the standard format ID is transferred to the IC recorder 20. During the recording operation by the IC recorder 20, one standard format ID is selected from the standard format ID list, and written onto the header of the voice data file. When the PC 30 performs the transcription process on the voice data, the standard format ID is read, and the standard format corresponding to the ID is read to be used in the transcription process. This arrangement eliminates the need for inputting the key code, and without a complex operation, the standard format meeting the purpose of the transcription process is accurately selected.

In accordance with embodiments of the present invention, the transcription apparatus and the dictation system efficiently select and specify the standard format.

The present invention is not limited to the above-referenced embodiments. Various changes and modifications of the embodiments are possible without departing from the scope of the present invention. The above-referenced embodiments include a variety of elements, and any combination of the elements falls within the scope of the present invention.

Having described the preferred embodiments of the invention referring to the accompanying drawings, it should be understood that the present invention is not limited to those precise embodiments and various changes and modifications thereof could be made by one skilled in the art without departing from the spirit or scope of the invention as defined in the appended claims.

## Claims

1. A transcription apparatus, comprising:
selecting means for selecting voice data to be transcribed;
identification information reading means for reading identification information of the voice data selected by the selecting means;
start command means for issuing a command for starting a transcription operation;
starting means for starting a predetermined document processing system in response to the command for starting the transcription operation issued by the start command means; and
standard format setting means for setting a predetermined standard format at the start of the predetermined document processing system, based on the identification information read by the identification information reading means.

2. The transcription apparatus according to claim 1, further comprising:
document processing system specifying means for specifying a document processing system for use in the transcription operation; and
associating means for associating the standard format for use in the document processing system with the identification information attached to the voice data.

3. A recording medium which stores a transcription software program for causing a computer to play voice data, the transcription software program comprising steps of:
allowing a user to select voice data to be transcribed;
reading identification information of the selected voice data; and
setting a predetermined standard format responsive to the identification information to start a predetermined document processing system in response to a command for starting a transcription operation issued by the user.

4. A dictation system, comprising a voice data recorder which records voice data, and a transcription apparatus which performs transcription operation by acquiring the voice data recorded by the voice data recorder,
wherein the voice data recorder comprises:
recording means for recording the voice data onto a recording medium;
identification information attaching means for attaching identification information to the voice data when the voice data is recorded;
transmitting means for transmitting the voice data from the recording medium to the transcription apparatus; and
wherein the transcription apparatus comprises:
receiving means for receiving the voice data from the voice data recorder;
identification information reading means for reading the identification information of the received voice data;
start command means for issuing a command for starting the transcription operation;
starting means for starting a predetermined document processing system in response to the command for starting the transcription operation issued by the start command means; and
standard format setting means for setting a predetermined standard format at the start of the predetermined document processing system, based on the identification information read by the identification information reading means.

5. The dictation system according to claim 4, wherein the transcription apparatus, further comprises:
identification information list generating means for generating an identification information list; and
identification information list transmitting means for transmitting the identification information list to the voice data recorder; and
wherein the voice data recorder comprises identification information list receiving means for receiving the identification information list from the transcription apparatus, and wherein the identification information attaching means selects any identification information from the identification information list.

6. A method for transcribing voice data, comprising steps of:
selecting the voice data to be transcribed;
reading identification information of the selected voice data; and
setting a predetermined standard format responsive to the identification information to start a predetermined document processing system.
